# EUROPEAN PATENT APPLICATION

(11) **EP 0 899 891 A2**
(43) Date of publication of application: **03.03.1999**
(21) Application number: 98306012.0
(22) Date of filing: 28.07.1998
(51) Int. Cl.: H04B 1/38

(54) **A wireless terminal adapted for inductively coupling with a radio**

(30) Priority: 09.08.1997 US 904127
(71) Applicant: LUCENT TECHNOLOGIES INC., Murray Hill, New Jersey 07974-0636 (US)
(72) Inventor: Vermeer, Fulps Vincentinus, Nieuwegein (NL)
(74) Representative: Buckley, Christopher Simon Thirsk

(57) **Abstract**

A wireless terminal (500) transmits and receives RF signals to and from a radio card in the wireless terminal (in 503) via one or more antennas on the radio card that are matched with adjacent antennas (505, 507) in the wireless terminal. When the RF signals are at RF frequencies and the design of the inductors and striplines are carefully chosen, the signals will inductively couple across the mechanical and electrical gap between the wireless terminal and the radio card, and, therefore, a cable is not needed to carry the RF signals between the wireless terminal and the radio card.

## Description

### Field of the Invention

The present invention relates to a wireless terminal in general, and, more particularly, to a wireless terminal that is adapted for communicating with a radio, such as a radio PC card.

### Background of the Invention

In the last few years it has become increasingly common for a hand-held wireless terminal (*e.g.,* a supermarket scanner, a warehouse data-entry device, *etc.*) to be equipped with a wireless telecommunications capability to enable the wireless terminal to transmit information to a host system, or to receive information from the host system, or both. For example, a worker in a warehouse can carry a wireless terminal to assist a host system in monitoring inventory. The host system can transmit by radio to the wireless terminal a request to the worker to check how many units of a particular item are in the warehouse. After the worker has counted the number of units the worker can enter the number into the wireless terminal, which relays the number back to the host system by radio.

Although some wireless terminals (*e.g.,* cellular telephones, cordless telephones, *etc.*) are manufactured with a permanent, integrated radio, other wireless terminals (*e.g.,* hand-held data-entry devices, notebook computers, *etc.*) are not. One advantage of manufacturing a wireless terminal without a permanent radio is that it enables the end-user to select a radio for mating with the wireless terminal that is appropriate for the environment in which the wireless terminal is to operate.

The wireless terminals that are manufactured without an integrated radio are, however, usually manufactured with the capability to connect with a radio. Typically, the connection is made through an industry-standard interface that prescribes both the mechanical and electrical interface. Currently, the PCMCIA "PC Card" interface is the standard to which almost all wireless terminals are designed.

The PCMCIA interface prescribes a slot in the wireless terminal for receiving a credit-card shaped radio card and a 68-pin electrical connector on both the radio card and in the slot so that the radio card and the wireless terminal can share power, ground and signaling. The PCMCIA interface also specifies the voltages, timing, and signaling protocols on each lead of the 68-pin electrical connector.

Typically, a PCMCIA radio card has a built-in antenna for transmitting and receiving signals, but such a built-in antenna rarely has as good radio propagation characteristics as does an external antenna that is mounted on the outside of the wireless terminal. Therefore, when a user desires to have a PCMCIA radio card employ an external antenna that is part ofthe wireless terminal some provision must be made to connect the radio card to the antenna. Unfortunately, the PCMCIA interface specification does not provide for the transmission of RF signals over the 68-pin interface, and, therefore, a separate cable is typically provided to carry the RF signals between the antenna and a non-standard connector that must be added to the radio card.

It is clearly advantageous for a radio on a radio card to be able to use an external antenna that is mounted on the wireless terminal, but the necessity of providing a separate cable to carry the RF signals adds to the cost of both the wireless terminal and the radio card. Furthermore, the cable must be connected to the radio card each time the radio card is inserted, which given that the components are small and the space constraints tight, can hamper the task of attaching the cable to the radio card. Therefore, a need exists for a better mechanism for connecting a radio on a radio card to an externally mounted antenna.

### Summary of the Invention

Some embodiments ofthe present invention are capable of interfacing an antenna on a wireless terminal to a radio card that is inserted into the wireless terminal without some of the costs and restrictions associated with techniques in the prior art. In particular, some embodiments of the present invention are capable of carrying the signals from the radio card to the antenna, or from the antenna to the radio card, or both, without a cable or an additional electrical connector on either the radio card or the wireless terminal, and without changing the PCMCIA interface specification.

These advantages can be found in an embodiment of the present invention in which the signals to and from the wireless terminal's antenna are transmitted to and from the radio card via one or more inductive couplings. For example, signals from the wireless terminal's antenna are transmitted from an inductor or stripline on the wireless terminal to an adjacent corresponding inductor or stripline on the radio card. When the signals are at RF frequencies and the design of the inductors or striplines is carefully chosen, the signals will inductively couple across the mechanical and electrical gap between the wireless terminal and the radio card.

### Brief Description of the Drawings

FIG. 1 depicts a drawing of the top of a radio card in accordance with the illustrative embodiments of the present invention.

FIG. 2 depicts a drawing of the bottom ofthe radio card of FIG. 1 in accordance with one illustrative embodiment of the present invention.

FIG. 3 depicts a drawing of the bottom of the radio card of FIG. 1 in accordance with another illustrative embodiment ofthe present invention.

FIG. 4 depicts a drawing of the bottom of the radio card of FIG. 1 in accordance with yet another illustrative embodiment of the present invention.

FIG. 5 depicts an exploded isometric drawing of a wireless terminal that interfaces with the radio card of FIG. 2 in accordance with one illustrative embodiment of the present invention.

FIG. 6 depicts an exploded isometric drawing of a wireless terminal that interfaces with the radio card of FIG. 3 in accordance with another illustrative embodiment of the present invention.

FIG. 7 depicts the geometry of two striplines as used in some embodiments of the present invention.

FIG. 8 depicts an exploded isometric drawing of a wireless terminal that interfaces with the radio card of FIG. 4 in accordance with yet another illustrative embodiment of the present invention.

FIG. 9 depicts a side view of a wireless terminal and a mated radio card in accordance with some embodiments of the present invention.

### Detailed Description

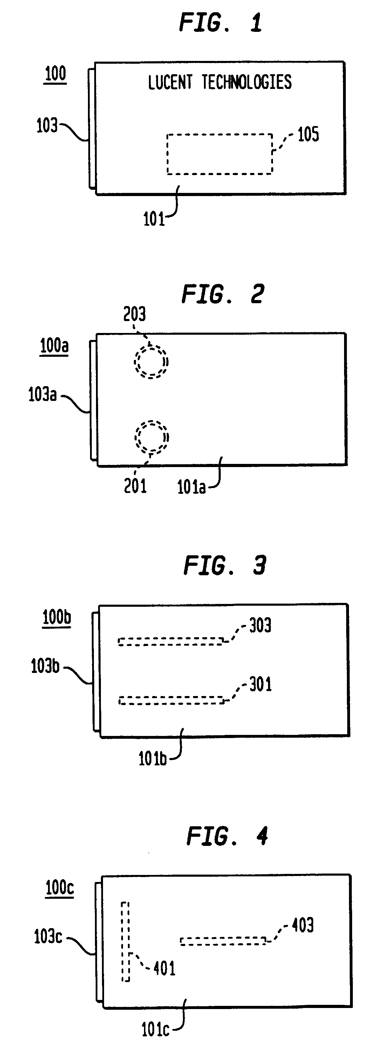

FIG. 1 depicts a drawing of the top of radio card 100 in accordance with the illustrative embodiment of the present invention. As shown in FIG. 1 radio card 100 advantageously conforms to a standard PCMCIA form factor and comprises radio 105 and 68-pin connector 103. Radio card 100 is preferably capable of being inserted into a standard PCMCIA card slot on a wireless terminal and detachably connecting to a 68-pin connector in the wireless terminal in well-known fashion. Regardless of whether or not radio card 100 comprises an integrated antenna for transmitting signals to or from a remote base station, radio 105 is advantageously designed to transmit and receive signals through an antenna that is integral to the wireless terminal into which radio card 100 is inserted. To accomplish this, some provision must be made to carry the signals from radio 105 to the antenna and vice versa.

Although an electrical connector could be added to radio card 100 to enable the electrical connection of radio 105 to an antenna on the wireless terminal, an electrical connector is expensive, it can corrode or otherwise become the source of noise and it must be manually connected when inserting radio card 100 into the wireless terminal.

To mitigate these disadvantages, FIGs. 2, 3 and 4 each depict a drawing of the bottom of radio card 100 in accordance with an illustrative embodiment of the present invention. In each of FIGs. 2, 3 and 4, radio card 100 comprises a first antenna, such as coil 201, stripline 301 or stripline 401, through which radio 105 can transmit or receive or transmit and receive a signal to a proximate matching antenna in the wireless terminal, which carries the signal to or from or to and from the wireless terminal's antenna. Thus, radio card 100 uses an antenna to induce the signal from radio 105 on radio card 100 to another antenna on the wireless terminal so that the signal can be carried to a main antenna on the wireless terminal.

When radio 105 transmits and receives through a single antenna such as coil 201, radio 105 advantageously comprises a duplexor for separating the transmit and receive signals. Alternatively, as shown in FIGs. 2, 3 and 4, radio card 100 can transmit through a first antenna, such as coil 201, stripline 301 or stripline 401 and receive through a second antenna, such as coil 203, stripline 303 or stripline 403.

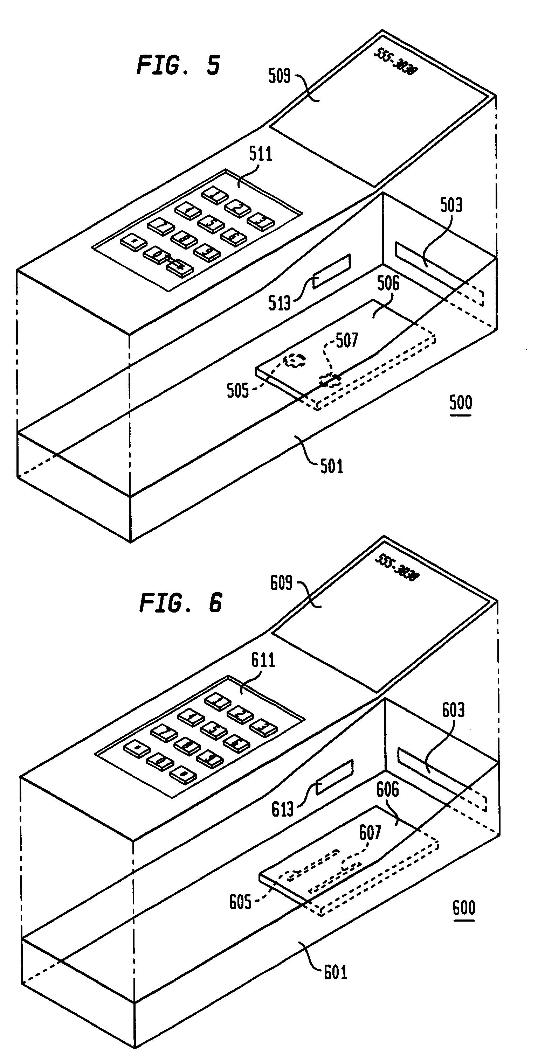

FIGs. 5, 6 and 8 each depict an exploded isometric drawing of a wireless terminal in accordance with an illustrative embodiment of the present invention. For pedagogical reasons, most of the circuitry within the wireless terminals is not shown. As shown in FIG. 5, wireless terminal 500 comprises housing 501, PCMCIA slot 503, pedestal 506, a first antenna such as coil 505, a second antenna such as coil 507, a wireless terminal antenna such as slot antenna 513, display 509 and keypad 511. Housing 501, PCMCIA slot 503, display 509 and keypad 511 are all well-known in the art and will not be discussed further. Wireless terminal antennas, such as slot antenna 513, are used for transmitting or receiving or transmitting and receiving signals from a remote base station or other wireless terminal and are well-known in the art. The disclosure of U.S. Patent Application Serial No. 08/781,970, entitled "Antenna Apparatus in Wireless Terminals," now pending, is incorporated by reference and teaches how to make and use slot antennas in wireless terminals.

Wireless terminal 500 is advantageously capable of detachably receiving radio card 100a of FIG. 2 so that coil 201 and coil 505 are coaxial, proximate and advantageously within 1.5 mm. Similarly, both wireless terminal 500 and radio card 100a are designed to that coil 203 and coil 507 are coaxial, proximate and advantageously within 1.5 mm. When radio 105 transmits and receives at IF or RF frequencies, coils 201, 203, 505 and 507 will induce the signals across the gap from pedestal 506 to radio card 100a. It will be clear to those skilled in the art how to make and use coils 201, 203, 505 and 507.

Coil 505 and coil 507 are advantageously, but not necessarily, mounted on pedestal 506, which is used to position coil 505 close to coil 201 and coil 507 close to coil 203 when radio card 100a is inserted into wireless terminal 500. Slot antenna 513 is advantageously electrically connected to both coil 505 and coil 507 and wireless terminal 500 can also comprise an amplifier in the transmit path to slot antenna 513. It will be clear to those skilled in the art how to make and use wireless terminal 500 and radio card 100a.

FIG. 6 depicts an exploded isometric drawing of wireless terminal 600, which is analogous to wireless terminal 500 in all respects except that it comprises stripline 605 in place of coil 505 and stripline 607 in place of coil 507 and is intended to be mated with radio card 100b, as shown in FIG. 3.

Wireless terminal 600 is advantageously capable of detachably receiving radio card 100b of FIG. 3 so that stripline 301 and stripline 605 are parallel, proximate and advantageously within 1.5 mm. Similarly both wireless terminal 600 and radio card 100b are designed so that stripline 303 and stripline 607 are parallel, proximate and advantageously within 1.5 mm. When radio 105 transmits or receives at IF or RF frequencies, striplines 301, 303, 505 and 507 will induce the signals across the gap from pedestal 606 to radio card 100b.

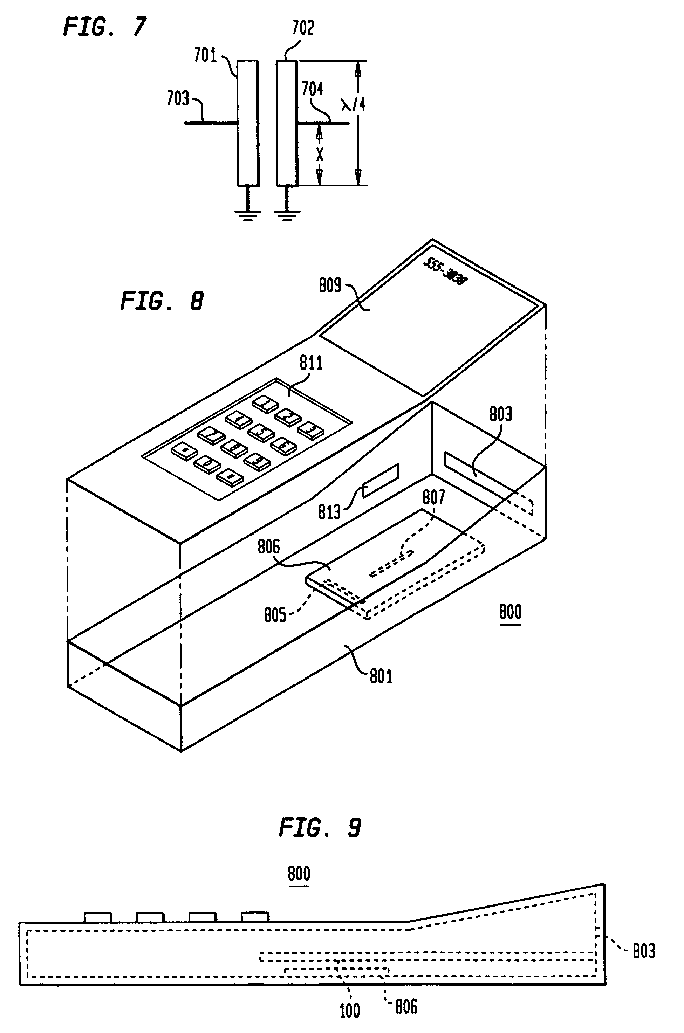

FIG. 7 depicts a drawing of two striplines that are capable of inducing a signal from one to the other. As is well-known to those skilled in the art, the geometry of a stripline affects its impedance and its efficiency at transmitting and receiving signals. Advantageously, the length of a stripline equals one-quarter the wavelength of the carrier of the signal that is being transmitted. It will be clear to those skilled in the art how to make and use wireless terminal 600 and radio card 100b.

Because stripline 605 and stripline 607 are parallel to each other, as well as to their associated striplines on radio card 100b, they may induce a signal in the other. To mitigate this effect, FIG. 8 depicts an exploded isometric drawing of a wireless terminal in which the two striplines are positioned perpendicular to each other. Otherwise, wireless terminal 800 is analogous to wireless terminal 600 in all respects except that its striplines are perpendicular and it is intended to be mated with radio card 100c, as shown in FIG. 4. It will be clear to those skilled in the art how to make and use wireless terminal 800 and radio card 100c.

FIG. 9 depicts a side view drawing of wireless terminal 800 that shows the relative position of radio card 100, pedestal 806 and PCMCIA slot 803 when radio card 100 is inserted into wireless terminal 800.

It will be understood to those skilled in the art that the previous teaching is merely illustrative and that other embodiments ofthe present invention not specifically taught here are within the spirit and scope of the claims.

## Claims

1. A wireless terminal comprising:
a housing;
a slot in said housing capable of detachably receiving a radio card that transmits a first signal through a first antenna;
a wireless terminal antenna; and
a second antenna that is proximate to said first antenna when said radio card is inserted into said slot for receiving said first signal from said first antenna and for providing said first signal to said wireless terminal antenna.

2. A wireless terminal comprising:
a housing;
a slot in said housing capable of detachably receiving a radio card that receives a first signal through a first antenna;
a wireless terminal antenna; and
a second antenna that is proximate to said first antenna when said radio card is inserted into said slot for receiving said first signal from said wireless terminal antenna and for providing said first signal to said first antenna.

3. A wireless terminal comprising:
a housing;
a slot in said housing capable of detachably receiving a radio card that emits a first signal through a first antenna and receives a second signal through a second antenna;
a wireless terminal antenna;
a third antenna that is proximate to said first antenna when said radio card is inserted into said slot for receiving said first signal from said first antenna and for providing said first signal to said wireless terminal antenna; and
a fourth antenna that is proximate to said second antenna when said radio card is inserted into said slot for receiving said second signal from said wireless terminal antenna and for providing said second signal to said second antenna.

4. A wireless terminal as claimed in claim 1,2 or 3 comprising said radio card.

5. A wireless terminal as claimed in claim 3 wherein said first antenna is a first coil, said second antenna is a second coil, said third antenna is a third coil and said fourth antenna is a fourth coil.

6. A wireless terminal as claimed in claim 5 wherein said first coil and said third coil are coaxial.

7. A wireless terminal as claimed in claim 6 wherein said first coil and said third coil are within 1.5 mm.

8. A wireless terminal as claimed in claim 3 wherein said first antenna is a first stripline, said second antenna is a second stripline, said third antenna is a third stripline and said fourth antenna is a fourth stripline.

9. A wireless terminal as claimed in claim 8 wherein said first stripline and said third stripline are within 1.5 mm, and said second stripline and said fourth stripline are within 1.5 mm.

10. A wireless terminal as claimed in claim 8 wherein said third stripline and said fourth stripline are parallel.

11. A wireless terminal as claimed in claim 8 wherein said third stripline and said fourth stripline are perpendicular.

12. A wireless terminal comprising:
a radio card comprising:
(1) a radio, and
(2) a first antenna for transmitting a first signal from said radio;
a wireless terminal antenna; and
a second antenna that is proximate to said first antenna for receiving said first signal from said first antenna and for providing said first signal to said wireless terminal antenna.

13. A wireless terminal as claimed in claim 1,2 or 12 wherein said first antenna and said second antenna are coils.

14. A wireless terminal as claimed in claim 13 wherein said coils are coaxial.

15. A wireless terminal as claimed in claim 13 or 14 wherein said coils are within 1.5 mm.

16. A wireless terminal as claimed in claim 1,2 or 12 wherein said first antenna is a first stripline and said second antenna is a second stripline.

17. A wireless terminal as claimed in claim 8 or 16 wherein said first stripline and said second stripline are parallel.

18. A wireless terminal as claimed in claim 17 wherein said striplines are within 1.5 mm.

19. A wireless terminal as claimed in claim 12 wherein said radio card comprises a third antenna for receiving a second signal for said radio, and said wireless terminal comprises a fourth antenna that is proximate to said third antenna for receiving said second signal from said wireless terminal antenna and for providing said second signal to said third antenna.

20. A wireless terminal as claimed in claim 19 wherein said third antenna is a third stripline and said fourth antenna is a fourth stripline.

21. A wireless terminal as claimed in claim 19 wherein said third antenna is a third coil and said fourth antenna is a fourth coil.

22. A wireless terminal as claimed in claim 21 wherein said third coil and said fourth coil are within 1.5 mm.
